# EUROPÄISCHE PATENTANMELDUNG

(11) **EP 3 085 519 A1**
(43) Veröffentlichungstag der Anmeldung: **26.10.2016**
(21) Anmeldenummer: 16166418.0
(22) Anmeldetag: 21.04.2016
(51) Int. Cl.: B29C 67/00, B33Y 10/00

(54) **VERFAHREN UND VORRICHTUNG ZUM HERSTELLEN EINES DREIDIMENSIONALEN OBJEKTS**

(30) Priorität: 22.04.2015 DE 102015207306
(71) Anmelder: EOS GmbH Electro Optical Systems, 82152 Krailling (DE)
(72) Erfinder: THIEL, Thomas, 80687 München (DE)
(74) Vertreter: Prüfer & Partner mbB Patentanwälte · Rechtsanwälte

(57) **Zusammenfassung**

Ein Verfahren zum Herstellen eines dreidimensionalen Objekts (2) durch schichtweises Aufbringen und selektives Verfestigen eines Aufbaumaterials (13) umfasst die Schritte: Aufbringen einer Schicht des Aufbaumaterials (13) auf ein Baufeld mittels eines über das Baufeld fahrenden Beschichters (14), selektives Verfestigen der aufgebrachten Schicht an Stellen, die einem Querschnitt des herzustellenden Objekts (2) entsprechen, und Wiederholen der Schritte des Aufbringens und des selektiven Verfestigens, bis das Objekt (2) fertiggestellt ist. Dabei wird durch die obigen Schritte zunächst eine Stützkonstruktion (30) auf einer Bauplattform (9) und dann das Objekt (2) auf der Stützkonstruktion (30) gebildet, wobei die Stützkonstruktion (30) einen geschwächten Bereich (30b) aufweist, der im Durchschnitt näher an der Bauplattform (9) als an dem Objekt (2) angeordnet ist und der leichter durchtrennbar ist als die in der Höhe benachbarten Bereiche (30a) der Stützkonstruktion.

## Beschreibung

Die vorliegende Erfindung bezieht sich auf ein Verfahren und eine Vorrichtung zum Herstellen eines dreidimensionalen Objektes durch selektives schichtweises Verfestigen von Aufbaumaterial.

Verfahren und Vorrichtungen dieser Art werden beispielsweise beim Rapid Prototyping, Rapid Tooling oder Additive Manufacturing verwendet. Ein Beispiel eines solchen Verfahrens ist unter dem Namen "Selektives Lasersintern oder Laserschmelzen" bekannt. Dabei wird wiederholt eine dünne Schicht eines pulverförmigen Aufbaumaterials aufgebracht und das Aufbaumaterial in jeder Schicht durch selektives Bestrahlen mit einem Laserstrahl selektiv verfestigt.

In DE 195 38 257 A1 ist ein Verfahren beschrieben, bei dem neben dem Herstellen eines Objekts auch das Herstellen einer Stützkonstruktion zum Stützen von Teilen des Objekts bzw. des gesamten Objekts vorgesehen ist. Um ein leichtes Ablösen der Stützkonstruktion von dem hergestellten Objekt zu ermöglichen, wird die Stützkonstruktion in einen inneren Kernbereich und einen äußeren Hüllenbereich zerlegt und der Hüllenbereich weniger stark belichtet.

Insbesondere bei metallischen Aufbaumaterialien ist es vorteilhaft, das Objekt auf einer Bauplattform herzustellen, an der das Aufbaumaterial bei der Verfestigung anhaftet. Ein derartiges Verfahren ist aus DE 195 11 772 C2 bekannt. Das hergestellte dreidimensionale Objekt kann nach Fertigstellung von der Bauplattform getrennt werden, oder die Bauplattform bildet einen integralen Bestandteil des Objekts.

Wird das Objekt auf einer Stützkonstruktion gefertigt, so ist bezüglich der Dicke der gewählten Stützkonstruktion eine Abwägung zwischen ausreichender Stabilität zum Stützen des Objekts und guter Durchtrennbarkeit zum Abtrennen von der Bauplattform zu treffen.

Die Aufgabe der vorliegenden Erfindung besteht darin, ein alternatives, bevorzugt verbessertes Verfahren zum Herstellen eines dreidimensionalen Objekts mit einer Stützkonstruktion, sowie eine Vorrichtung, welche geeignet ist das Verfahren durchzuführen, bereitzustellen, wobei insbesondere des Entfernen der Stützkonstruktion mit dem fertig hergestellten Objekt von der Bauplattform schnell und auf einfache Art und Weise verwirklicht werden kann.

Die Aufgabe wird gelöst durch ein Verfahren gemäß Anspruch 1 und eine Vorrichtung gemäß Anspruch 15. Weiterbildungen der Erfindung sind in den Unteransprüchen angegeben. Dabei kann die Vorrichtung auch durch die untenstehenden bzw. in den Unteran-sprüchen ausgeführten Merkmale des Verfahrens weitergebildet sein und umgekehrt.

Das erfindungsgemäße Verfahren zum Herstellen eines dreidimensionalen Objekts durch schichtweises Aufbringen und selektives Verfestigen eines Aufbaumaterials umfasst die Schritte: Aufbringen einer Schicht des Aufbaumaterials auf ein Baufeld mittels eines über das Baufeld fahrenden Beschichters, selektives Verfestigen der aufgebrachten Schicht an Stellen, die einem Querschnitt des herzustellenden Objekts entsprechen, und wiederholen der Schritte des Aufbringens und des selektiven Verfestigens, bis das Objekt fertiggestellt ist. Dabei wird durch die obigen Schritte zunächst eine Stützkonstruktion auf einer Bauplattform und dann das Objekt auf der Stützkonstruktion gebildet, wobei die Stützkonstruktion einen geschwächten Bereich aufweist, der im Durchschnitt näher an der Bauplattform als an dem Objekt angeordnet ist und der leichter durchtrennbar ist als die in der Höhe benachbarten Bereiche der Stützkonstruktion.

Dieses Verfahren ermöglicht ein einfaches und schnelles Abtrennen der Stützkonstruktion von der Bauplattform nach Fertigstellung des Objekts, da der geschwächte Bereich der Stützkonstruktion leicht durchtrennbar ist. Die nicht geschwächten Bereiche der Stützkonstruktion oberhalb und unterhalb des geschwächten Bereichs gewährleisten eine gute Anbindung des Bauteils an der Bauplattform, sowie eine ausreichende Stabilität der Stützkonstruktion. Durch das nahezu vollständige Entfernen der Stützkonstruktion von der Bauplattform kann die Bauplattform für einen weiteren Bauvorgang wieder verwendet werden.

Zum Ausbilden des geschwächten Bereichs der Stützkonstruktion kann das Aufbaumaterial dort weniger stark verfestigt werden als an den in der Höhe benachbarten Bereichen der Stützkonstruktion. Erfolgt das Verfestigen des Materials durch Energieeintragung, so kann der geschwächte Bereich der Stützkonstruktion insbesondere dadurch gebildet werden, dass dort dem Aufbaumaterial weniger Energie pro Flächeneinheit zugeführt wird als an den in der Höhe benachbarten Bereichen der Stützkonstruktion. Erfolgt das Verfestigen des Materials durch Strahlung, so kann der geschwächte Bereich der Stützkonstruktion insbesondere dadurch gebildet werden, dass dort das Aufbaumaterial schwächer bestrahlt wird als die in der Höhe benachbarten Bereiche der Stützkonstruktion. Zusätzlich oder alternativ kann der geschwächte Bereich der Stützkonstruktion dadurch gebildet sein, dass dort die verfestigte Querschnittsfläche der Stützkonstruktion geringer ist als diejenige an den in der Höhe benachbarten Bereichen der Stützkonstruktion. Dadurch werden mehrere alternative Verfahren bereitgestellt, mit denen es möglich ist, den geschwächten Bereich der Stützkonstruktion auf einfache Art und Weise zu realisieren.

Vorzugsweise wird die Stützkonstruktion so gebildet, dass sie aus einzelnen Stützen besteht, zwischen denen parallel zur Bauplattform ein Abstand liegt. Dies bedeutet, dass mindestens zwei separate Stützen in der Stützkonstruktion vorliegen, zwischen denen parallel zur Bauplattform ein Abstand liegt. Die Ausführung der Stützkonstruktion als einzelne Stützen erlaubt eine gleichmäßige Unterstützung des Objekts oder Teilen des Objekts. Zudem sind einzelne Stützen baulich einfacher zu realisieren und benötigen weniger Aufbaumaterial als großflächige Stützkonstruktionen.

Vorzugsweise sind dabei zwischen den einzelnen Stützen abschnittsweise Querverbindungen angeordnet, die benachbarte Stützen miteinander verbinden. Dadurch wird die Stabilität der aus einzelnen Stützen bestehenden Stützkonstruktion erhöht.

Vorzugsweise wird der geschwächte Bereich der Stützkonstruktion so gebildet, dass er über die gesamte Bauplattform hinweg in einer im Wesentlichen konstanten Höhe über der Bauplattform angeordnet ist. Dies erleichtert das Abtrennen der Stützkonstruktion von der Bauplattform nach Fertigstellung des Objekts, beispielsweise durch Führen eines Sägeblattes in einer konstanten Höhe über der Bauplattform durch den geschwächten Bereich.

Vorzugsweise ist eine untere Begrenzung des geschwächten Bereichs der Stützkonstruktion beabstandet von der Bauplattform vorgesehen, welche bevorzugt mindestens 0,1 mm und/oder höchstens 1,0 mm, besonders bevorzugt mindestens 0,3 mm und/oder höchstens 0,5 mm, oberhalb der Bauplattform liegt. Vorzugsweise ist eine obere Begrenzung des geschwächten Bereichs der Stützkonstruktion vorgesehen, welche mindestens 0,3 mm und/oder höchstens 5,0 mm, bevorzugt mindestens 0,5 mm und/oder höchstens 2,5 mm, oberhalb der Bauplattform liegt. Dadurch, dass der geschwächte Bereich nicht unmittelbar an die Bauplattform grenzt, wird eine gute Anbindung der Stützkonstruktion an die Bauplattform erzielt. Zugleich wird der geschwächte Bereich bauplattformnah gebildet, so dass nach Abtrennen der Stützkonstruktion von der Bauplattform nur ein geringer Teil der Stützkonstruktion auf der Bauplattform verbleibt.

Vorzugsweise ist das Aufbaumaterial ein pulverförmiges Material, weiter bevorzugt ein Metallpulver. Da metallische Materia-Verwendung von Metallpulvern als Aufbaumaterial durch den geschwächten Bereich eine besonders gute Wirkung erzielen.

Ein erfindungsgemäßes Computerprogramm ist in eine programmierbare Steuereinheit ladbar und umfasst Programmcodemittel, um alle Schritte des oben beschriebenen Verfahrens auszuführen, wenn das Computerprogramm auf der Steuereinheit ausgeführt wird. Dadurch ist es möglich, das erfindungsgemäße Erfahren auf einfache Weise durch Ausführen des Computerprogramms in einer Steuereinheit auszuführen.

Eine erfindungsgemäße Steuereinheit ist für eine Vorrichtung zum Herstellen eines dreidimensionalen Objekts durch schichtweises Aufbringen und selektives Verfestigen eines Aufbaumaterials vorgesehen, wobei die Vorrichtung einen über ein Baufeld bewegbaren Beschichter zum Aufbringen einer Schicht des Aufbaumaterials auf das Baufeld umfasst, sowie eine Verfestigungsvorrichtung zum selektiven Verfestigen der aufgebrachten Schicht an Stellen, die einem Querschnitt des herzustellenden Objekts entsprechen. Die erfindungsgemäße Vorrichtung ist dazu ausgebildet, die Schritte des Aufbringens und des selektiven Verfestigens zu wiederholen, bis das Objekt fertiggestellt ist. Die Steuereinheit ist ausgebildet, die Vorrichtung so zu steuern, dass sie zunächst eine Stützkonstruktion auf einer Bauplattform und dann das Objekt auf der Stützkonstruktion bildet und die Stützkonstruktion so bildet, dass sie einen geschwächten Bereich aufweist, der im Durchschnitt näher an der Bauplattform als an dem Objekt angeordnet ist und der leichter durchtrennbar ist als die in der Höhe benachbarten Bereiche der Stützkonstruktion. Dadurch ist es möglich, das erfindungsgemäße Verfahren mittels der Steuereinheit auszuführen.

Eine erfindungsgemäße Vorrichtung zum Herstellen eines dreidimensionalen Objekts durch schichtweises Aufbringen und selektives Verfestigen eines Aufbaumaterials umfasst: einen über ein Baufeld bewegbaren Beschichter zum Aufbringen einer Schicht des Aufbaumaterials auf das Baufeld und eine Verfestigungsvorrichtung zum selektiven Verfestigen der aufgebrachten Schicht an Stellen, die einem Querschnitt des herzustellenden Objekts entsprechen. Dabei ist die Vorrichtung derart ausgebildet und/oder gesteuert, die Schritte des Aufbringens und des selektiven Verfestigens zu wiederholen, bis das Objekt fertiggestellt ist, wobei zunächst eine Stützkonstruktion auf einer Bauplattform und dann das Objekt auf der Stützkonstruktion gebildet wird und die Stützkonstruktion so gebildet wird, dass sie einen geschwächten Bereich aufweist, der im Durchschnitt näher an der Bauplattform als an dem Objekt angeordnet ist und der leichter durchtrennbar ist als die in der Höhe benachbarten Bereiche der Stützkonstruktion. Dadurch ist es möglich, das erfindungsgemäße Verfahren mittels der Vorrichtung zum Herstellen eines dreidimensionalen Objekts auszuführen.

Weitere Merkmale und Zweckmäßigkeiten der Erfindung ergeben sich aus der Beschreibung von Ausführungsbeispielen anhand der beigefügten Zeichnungen.
- Fig. 1: ist eine schematische, teilweise im Schnitt dargestellte Ansicht eines Ausführungsbeispiels einer Vorrichtung zum schichtweisen Herstellen eines dreidimensionalen Objekts, die zum Durchführen eines erfindungsgemäßen Verfahrens geeignet ist.
- Fig. 2: ist eine schematische, im Schnitt dargestellte Ansicht einer Stützkonstruktion mit einem geschwächten Bereich gemäß einer ersten Ausführungsform der Erfindung.
- Fig. 3a-3c: sind schematische, im Schnitt dargestellte Ansichten von Stützkonstruktionen gemäß einer zweiten Ausführungsform der Erfindung.

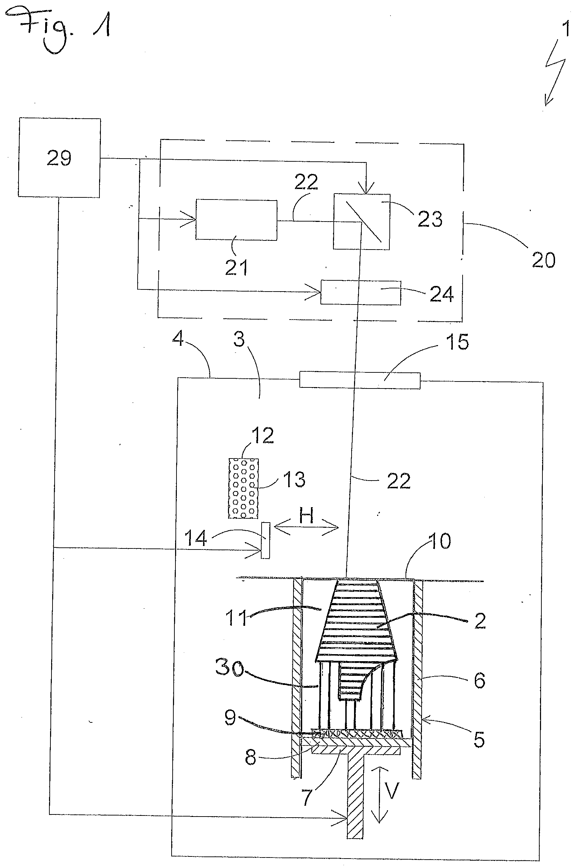

Im Folgenden wird mit Bezug auf Fig. 1 ein Ausführungsbeispiel einer Vorrichtung beschrieben, die zum Durchführen eines erfindungsgemäßen Verfahrens geeignet ist. Die in Fig. 1 dargestellte Vorrichtung ist eine Lasersinter- oder Laserschmelzvorrichtung 1. Zum Aufbauen eines Objekts 2 enthält sie eine Prozesskammer 3 mit einer Kammerwandung 4.

In der Prozesskammer 3 ist ein nach oben offener Behälter 5 mit einer Wandung 6 angeordnet. In dem Behälter 5 ist ein in einer vertikalen Richtung V bewegbarer Träger 7 angeordnet, an dem eine Grundplatte 8 angebracht ist, die den Behälter 5 nach unten abschließt und damit dessen Boden bildet. Die Grundplatte 8 kann eine getrennt von dem Träger 7 gebildete Platte sein, die an dem Träger 7 befestigt ist, oder sie kann integral mit dem Träger 7 gebildet sein. Je nach verwendetem Pulver und Prozess kann auf der Grundplatte 8 noch eine Bauplattform 9 angebracht sein, auf der die Stützkonstruktion 30 und das Objekt 2 aufgebaut werden. Die Bauplattform 9 ist bevorzugt aus einem mit dem Aufbaumaterial gut verträglichem Material gefertigt, so dass das Aufbaumaterial bei der Verfestigung an der Bauplattform 9 anhaftet. Die Stützkonstruktion 30 und das Objekt 2 können aber auch auf der Grundplatte 8 selber aufgebaut werden, die dann als Bauplattform dient. In Fig. 1 ist das zu bildende Objekt 2 auf einer Stützkonstruktion 30 unterhalb einer Arbeitsebene 10 in einem Zwischenzustand dargestellt mit mehreren verfestigten Schichten, umgeben von unverfestigt gebliebenem Aufbaumaterial 11.

Die Lasersintervorrichtung 1 enthält weiter einen Vorratsbehälter 12 für ein durch elektromagnetische Strahlung verfestigbares pulverförmiges Aufbaumaterial 13 und einen in einer horizontalen Richtung H bewegbaren Beschichter 14 zum Aufbringen des Aufbaumaterials 13 auf die Arbeitsebene 10. An ihrer Oberseite enthält die Wandung 4 der Prozesskammer 3 ein Einkoppelfenster 15 für die zum Verfestigen des Pulvers 13 dienende Strahlung 22.

Die Lasersintervorrichtung 1 enthält ferner eine Belichtungsvorrichtung 20 mit einem Laser 21, der einen Laserstrahl 22 erzeugt, der über eine Umlenkvorrichtung 23 umgelenkt und durch eine Fokussiervorrichtung 24 über das Einkoppelfenster 15 auf die Arbeitsebene 10 fokussiert wird.

Weiter enthält die Lasersintervorrichtung 1 eine Steuereinheit 29, über die die einzelnen Bestandteile der Vorrichtung 1 in koordinierter Weise zum Durchführen des Bauprozesses gesteuert werden. Die Steuereinheit kann eine CPU enthalten, deren Betrieb durch ein Computerprogramm (Software) gesteuert wird. Das Computerprogramm kann getrennt von der Vorrichtung auf einem Speichermedium gespeichert sein, von dem aus es in die Vorrichtung, insbesondere in die Steuereinheit geladen werden kann.

Im Betrieb wird zum Aufbringen einer Pulverschicht zunächst der Träger 7 um eine Höhe abgesenkt, die der gewünschten Schichtdicke entspricht. Durch Verfahren des Beschichters 14 über die Arbeitsebene 10 wird dann eine Schicht des pulverförmigen Aufbaumaterials 13 aufgebracht. Das Aufbringen erfolgt zumindest über den gesamten Querschnitt des herzustellenden Objekts 2, vorzugsweise über das gesamte Baufeld, also den Bereich der Arbeitsebene 10, der innerhalb der oberen Öffnung des Behälters 5 liegt. Anschließend wird der Querschnitt des herzustellenden Objekts 2 von dem Laserstrahl 22 abgetastet, so dass das pulverförmige Aufbaumaterial 13 an den Stellen verfestigt wird, die dem Querschnitt des herzustellenden Objekts 2 entsprechen. Diese Schritte werden solange wiederholt, bis das Objekt 2 fertiggestellt ist und dem Bauraum entnommen werden kann. Dazu wird zunächst die Bauplattform 9 mit der darauf gebildeten Stützkonstruktion 30 und dem Objekt 2 aus dem Bauraum heraus entnommen. Dann wird durch Durchtrennen der Stützkonstruktion 30 das Objekt 2 von der Bauplattform 9 getrennt.

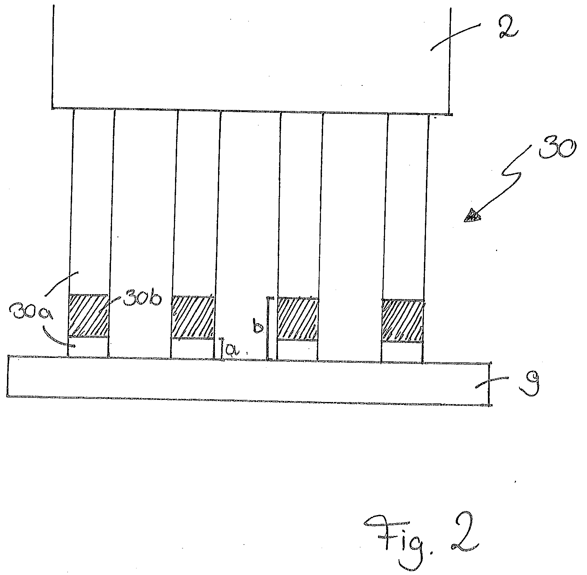

Fig. 2 zeigt in einer schematischen Schnittansicht eine Stützkonstruktion 30 gemäß einer ersten Ausführungsform. Die Stützkonstruktion 30 ist auf der Bauplattform 9 aufgebaut und stützt das Objekt 2 oder Teile des Objekts 2. Die Stützkonstruktion 30 weist einen geschwächten Bereich 30b auf, sowie nicht geschwächte Bereiche 30a oberhalb und unterhalb des geschwächten Bereichs 30b. Die Stützkonstruktion 30 ist in Fig. 2 als parallele Stützen 30 ausgeführt, die in einer zur Bauplattform 9 parallelen Ebene einen Abstand voneinander aufweisen. Zwischen den einzelnen Stützen 30 können in Fig. 2 nicht näher gezeigte Querverbindungen angeordnet sein, die benachbarte Stützen miteinander verbinden.

Der geschwächte Bereich 30b der Stützkonstruktion 30 ist oberhalb der Bauplattform 9 näher an der Bauplattform 9 angeordnet als an dem Objekt 2. Der geschwächte Bereich 30b weist eine untere Begrenzung auf, die von der Bauplattform 9 einen Abstand a hat. Der Abstand a beträgt bevorzugt mindestens 0,1 mm und/oder höchstens 1,0 mm, besonders bevorzugt mindestens 0,3 mmm und/oder höchstens 0,5 mm. Des Weiteren weist der geschwächte Bereich 30b eine obere Begrenzung auf, die von der Bauplattform 9 einen Abstand b hat. Der Abstand b beträgt bevorzugt mindestens 0,3 mm und/oder höchstens 5,0 mm, besonders bevorzugt mindestens 0,5 mmm und/oder höchstens 2,5 mm.

Der geschwächte Bereich 30b wird bevorzugt wie in Fig. 2 gezeigt so gebildet, dass er über die gesamte Bauplattform 9 hinweg in einer konstanten Höhe über der Bauplattform 9 angeordnet ist. Die Abstände a und b der unteren und oberen Begrenzung des geschwächten Bereichs 30b sind somit für alle in Fig. 2 gezeigten Stützen gleich groß.

Der geschwächte Bereich 30b zeichnet sich dadurch aus, dass er leichter durchtrennbar ist als die in der Höhe benachbarten, nicht geschwächten Bereiche 30a der Stützkonstruktion 30. Gemäß der ersten Ausführungsform wird der geschwächte Bereich 30b dadurch gebildet, dass in dem geschwächten Bereich 30b das Aufbaumaterial 13 weniger stark verfestigt wird als in den nicht geschwächten Bereichen 30a. Bei der in Fig. 1 gezeigten Lasersinter- oder Laserschmelzvorrichtung 1 erfolgt das Verfestigen des Aufbaumaterials 13 durch Strahlung 22, und der geschwächte Bereich 30b wird gemäß der ersten Ausführungsform dadurch gebildet, dass das Aufbaumaterial 13 in dem geschwächten Bereich 30b schwächer bestrahlt wird als in den nicht geschwächten Bereichen 30a. Generell wird gemäß einer ersten Ausführungsform der Erfindung dem Aufbaumaterial 13 in dem geschwächten Bereich 30b weniger Energie pro Flächeneinheit zugeführt als in den nicht geschwächten Bereichen 30a, wenn das Verfestigen des Aufbaumaterials 13 durch Energieeintragung erfolgt.

Dadurch wird erzielt, dass die Stützkonstruktion 30 nach Fertigstellung des Objekts 2 schnell und auf einfache Weise von der Bauplattform 9 abgetrennt werden kann, da der geschwächte Bereich 30b der Stützkonstruktion 30 leicht durchtrennbar ist, während die nicht geschwächten Bereiche 30a der Stützkonstruktion 30 oberhalb und unterhalb des geschwächten Bereichs 30b eine gute Anbindung des Bauteils an der Bauplattform, sowie eine ausreichende Stabilität der Stützkonstruktion gewährleisten.

In einer Abwandlung der ersten Ausführungsform wird der geschwächte Bereich 30b dadurch gebildet, dass in dem geschwächten Bereich 30b ein anderes Aufbaumaterial 13 verfestigt wird als in den nicht geschwächten Bereichen 30a. Das Aufbaumaterial 13 welches in dem geschwächten Bereich 30b verfestigt wird ist nach seiner Verfestigung leichter durchtrennbar als das Aufbaumaterial 13 der nicht verfestigten Bereiche 30a. Dadurch werden dieselben Wirkungen erzielt wie durch das weniger starke Verfestigen des Aufbaumaterials 13 in den geschwächten Bereichen 30b gemäß der ersten Ausführungsform. Beide Varianten (weniger starkes Verfestigen und anderes Aufbaumaterial) können auch miteinander kombiniert werden.

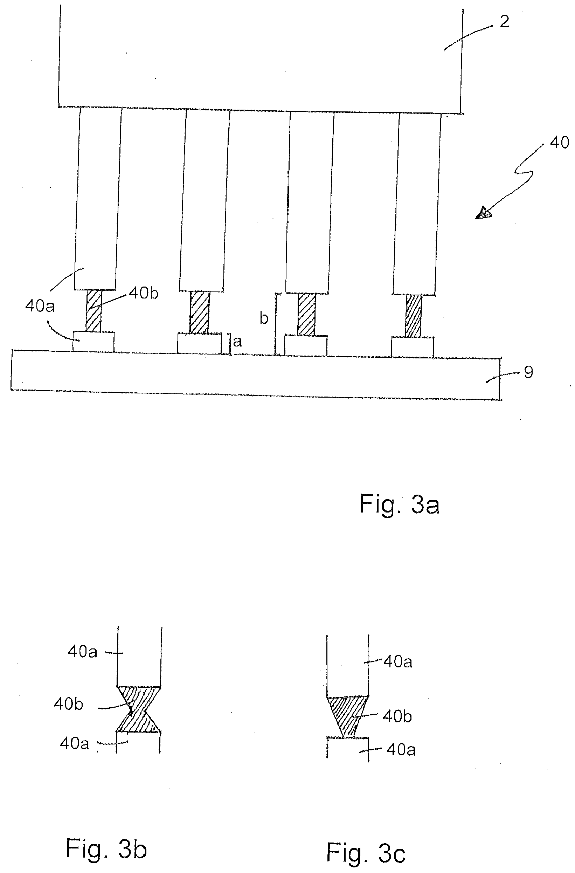

Fig. 3a zeigt in einer schematischen Schnittansicht eine Stützkonstruktion 40 gemäß einer zweiten Ausführungsform.

Bei der Stützkonstruktion 40 wird der geschwächte Bereich 40b dadurch gebildet, dass das Aufbaumaterial 13 so verfestigt wird, dass in dem geschwächten Bereich 40b nach der Verfestigung des Aufbaumaterials 13 die Querschnittsfläche der Stützkonstruktion 40 geringer ist als die Querschnittsfläche der nicht geschwächten Bereiche 40a. In Fig. 3a ist ein Beispiel gezeigt, bei dem die Querschnittsfläche einer Stütze über die gesamte Höhe des geschwächten Bereichs 40b konstant ist, wobei die Querschnittsfläche an dem geschwächten Bereich 40b der Stütze geringer ist als an den nicht geschwächten Bereichen 40a. Der in Fig. 3a gezeigte geschwächte Bereich 40b ist über seine gesamte Höhe leichter durchtrennbar als die nicht geschwächten Bereiche 40a der Stützkonstruktion 40.

Gemäß den in Fig. 3b und 3c gezeigten Abwandlungen kann der Querschnitt des geschwächten Bereichs 40b auch über die Höhe des geschwächten Bereichs 40b variieren, so dass der geschwächte Bereich 40b in wenigstens einer definierten Höhe besonders leicht durchtrennbar ist. Bei dem in Fig. 3b gezeigten Beispiel ist der geschwächte Bereich 40b in seiner Mitte besonders leicht durchtrennbar, in Fig. 3c in seinem untersten Bereich, welcher an den nicht geschwächten Bereich 40a der Stützkonstruktion 40 angrenzt.

Bei den in den Fig. 3a bis 3c gezeigten Beispielen kann in den geschwächten Bereichen 40b der Stützkonstruktion 40 das gleiche Aufbaumaterial wie in den nicht geschwächten Bereichen 40a bei gleichem Energieeintrag pro Flächeneinheit verwendet werden. Die geringere Querschnittsfläche in den geschwächten Bereichen 40b wird dadurch erzielt, dass das Aufbaumaterial in den den geschwächten Bereichen 40b entsprechenden Schichten an einer kleineren Querschnittsfläche verfestigt wird.

Dadurch, dass das Aufbaumaterial 13 in den geschwächten Bereichen 40b der Stützkonstruktion 40 in einer geringeren Querschnittsfläche verfestigt wird als in den nicht geschwächten Bereichen 40a, wird erreicht, dass die Stützkonstruktion 40 in den geschwächten Bereichen 40b leicht durchtrennbar ist. Dadurch kann das Objekt 2 nach seiner Fertigstellung durch Durchtrennen der Stützkonstruktion 40 in den geschwächten Bereichen 40b schnell und auf einfache Weise von der Bauplattform 9 abgetrennt werden. Die nicht geschwächten Bereiche 40a der Stützkonstruktion 40 oberhalb und unterhalb des geschwächten Bereichs 40b gewährleisten zudem eine gute Anbindung des Bauteils an der Bauplattform 9, sowie eine ausreichende Stabilität der Stützkonstruktion 40.

Die Merkmale der zweiten Ausführungsform (u.a. die geringere Querschnittsfläche) können mit denen der ersten Ausführungsform (u.a. weniger starke Verfestigung und/oder anderes Material) kombiniert sein.

In einer dritten, bildlich nicht dargestellten Ausführungsform wird eine geringere Querschnittsfläche in den geschwächten Bereichen dadurch realisiert, dass der Energieeintrag pro Flächeneinheit in den geschwächten Bereichen derart gewählt wird, dass eine poröse Struktur entsteht, während der Energieeintrag pro Flächeneinheit in den nicht geschwächten Bereichen derart gewählt wird, dass eine homogen verfestigte Struktur entsteht.

Die Stützkonstruktion ist nicht auf das in den Figuren gezeigte Beispiel paralleler Stützen beschränkt. Vielmehr kann die Stützkonstruktion jede beliebige zum Stützen des Objekts oder von Teilen des Objekts geeignete Form annehmen.

Auch wenn die vorliegende Erfindung anhand einer Lasersinter- bzw. Laserschmelzvorrichtung beschrieben wurde, ist sie nicht auf das Lasersintern oder Laserschmelzen beschränkt. Sie kann auf beliebige Verfahren zum Herstellen eines dreidimensionalen Objektes durch schichtweises Aufbringen und selektives Verfestigen eines pulverförmigen Aufbaumaterials angewendet werden.

Der Laser kann beispielsweise einen Gas- oder Festkörperlaser oder jede andere Art von Laser umfassen. Allgemein kann jede Einrichtung verwendet werden, mit der Energie selektiv auf eine Schicht des Aufbaumaterials aufgebracht werden kann. Anstelle eines Lasers können beispielsweise eine andere Lichtquelle, ein Elektronenstrahl oder jede andere Energie- bzw. Strahlenquelle verwendet werden, die geeignet ist, das Aufbaumaterial zu verfestigen. Auch auf das selektive Maskensintern, bei dem eine ausgedehnte Lichtquelle und eine Maske verwendet werden, oder auf das Absorptions- bzw. Inhibitionssintern kann die Erfindung angewendet werden.

Anstelle des Einbringens von Energie kann das selektive Verfestigen des aufgetragenen Aufbaumaterials auch durch 3D-Drucken erfolgen, beispielsweise durch Aufbringen eines Klebers. Allgemein bezieht sich die Erfindung auf das Herstellen eines Objekts mittels schichtweisen Auftragens und selektiven Verfestigens eines pulverförmigen Aufbaumaterials unabhängig von der Art und Weise, in der das Aufbaumaterial verfestigt wird.

Als Aufbaumaterial können verschiedene Materialien verwendet werden, insbesondere pulverförmige Materialien wie beispielsweise Metallpulver, Kunststoffpulver, Keramikpulver, Sand, gefüllte oder gemischte Pulver. Eine besonders gute Wirkung wird insbesondere bei Metallpulvern erzielt, da metallische Materialien besonders schwer durchtrennbar sind und der geschwächte Bereich der Stützkonstruktion das Abtrennen von der Bauplattform besonders erleichtert.

## Patentansprüche

1. Verfahren zum Herstellen eines dreidimensionalen Objekts (2) durch schichtweises Aufbringen und selektives Verfestigen eines Aufbaumaterials (13) mit den Schritten:
Aufbringen einer Schicht des Aufbaumaterials (13) auf ein Baufeld (10) mittels eines über das Baufeld (10) fahrenden Beschichters (14),
selektives Verfestigen der aufgebrachten Schicht an Stellen, die einem Querschnitt des herzustellenden Objekts (2) entsprechen, und
Wiederholen der Schritte des Aufbringens und des selektiven Verfestigens, bis das Objekt (2) fertiggestellt ist,
wobei durch die obigen Schritte zunächst eine Stützkonstruktion (30) auf einer Bauplattform (9) und dann das Objekt (2) auf der Stützkonstruktion (30) gebildet wird,
wobei die Stützkonstruktion (30, 40) einen geschwächten Bereich (30b, 40b) aufweist, der im Durchschnitt näher an der Bauplattform (9) als an dem Objekt (2) angeordnet ist und der leichter durchtrennbar ist als die in der Höhe benachbarten Bereiche (30a, 40a) der Stützkonstruktion (30, 40).

2. Verfahren nach Anspruch 1, wobei der geschwächte Bereich (30b) der Stützkonstruktion (30) dadurch gebildet wird, dass dort das Aufbaumaterial (13) weniger stark verfestigt wird als an den in der Höhe benachbarten Bereichen (30a) der Stützkonstruktion (30).

3. Verfahren nach Anspruch 2, wobei das Verfestigen des Materials (13) durch Energieeintragung erfolgt und
der geschwächte Bereich (30b) der Stützkonstruktion (30) dadurch gebildet wird, dass dort dem Aufbaumaterial (13) weniger Energie pro Flächeneinheit zugeführt wird als an den in der Höhe benachbarten Bereichen (30a) der Stützkonstruktion (30).

4. Verfahren nach Anspruch 3, wobei das Verfestigen des Materials (13) durch Strahlung (22) erfolgt und der geschwächte Bereich (30b) der Stützkonstruktion (30) zum Verfestigen des Aufbaumaterials (13) schwächer bestrahlt wird als die in der Höhe benachbarten Bereiche (30a) der Stützkonstruktion (30).

5. Verfahren nach einem der Ansprüche 1 bis 4, wobei der geschwächte Bereich (40b) der Stützkonstruktion (40) dadurch gebildet wird, dass dort die verfestigte Querschnittsfläche der Stützkonstruktion (40) geringer ist als diejenige an den in der Höhe benachbarten Bereichen (40a) der Stützkonstruktion (40).

6. Verfahren nach einem der Ansprüche 1 bis 5, wobei die Stützkonstruktion (30, 40) so gebildet wird, dass sie aus einzelnen Stützen besteht, zwischen denen parallel zur Bauplattform (9) ein Abstand liegt.

7. Verfahren nach Anspruch 6, wobei zwischen den einzelnen Stützen abschnittsweise Querverbindungen angeordnet sind, die benachbarte Stützen miteinander verbinden.

8. Verfahren nach einem der Ansprüche 1 bis 7, wobei der geschwächte Bereich (30b, 40b) der Stützkonstruktion (30, 40) so gebildet wird, dass er über die gesamte Bauplattform (9) hinweg in einer im Wesentlichen konstanten Höhe über der Bauplattform (9) angeordnet ist.

9. Verfahren nach einem der Ansprüche 1 bis 8, wobei eine untere Begrenzung des geschwächten Bereichs (30b, 40b) der Stützkonstruktion (30, 40) von der Bauplattform (9) beabstandet ist, bevorzugt mindestens 0,1 mm und/oder höchstens 1,0 mm, besonders bevorzugt mindestens 0,3 mm und/oder höchstens 0,5 mm, oberhalb der Bauplattform (9) liegt.

10. Verfahren nach einem der Ansprüche 1 bis 9, wobei eine obere Begrenzung des geschwächten Bereichs (30b, 40b) der Stützkonstruktion (30, 40) mindestens 0,3 mm und/oder höchstens 5,0 mm, bevorzugt mindestens 0,5 mm und/oder höchstens 2,5 mm, oberhalb der Bauplattform (9) liegt.

11. Verfahren nach einem der Ansprüche 1 bis 10, wobei das Aufbaumaterial (13) ein pulverförmiges Material ist.

12. Verfahren nach Anspruch 11, wobei das Aufbaumaterial (13) ein Metallpulver ist.

13. Computerprogramm, das in eine programmierbare Steuereinheit (29) ladbar ist, mit Programmcodemitteln, um alle Schritte eines Verfahrens gemäß einem der Ansprüche 1 bis 12 auszuführen, wenn das Computerprogramm auf der Steuereinheit (29) ausgeführt wird.

14. Steuereinheit (29) für eine Vorrichtung (1) zum Herstellen eines dreidimensionalen Objekts (2) durch schichtweises Aufbringen und selektives Verfestigen eines Aufbaumaterials (13), wobei die Vorrichtung umfasst:
einen über ein Baufeld (10) bewegbaren Beschichter (14) zum Aufbringen einer Schicht des Aufbaumaterials (13) auf das Baufeld (10) und
eine Verfestigungsvorrichtung (20) zum selektiven Verfestigen der aufgebrachten Schicht an Stellen, die einem Querschnitt des herzustellenden Objekts (2) entsprechen,
wobei die Vorrichtung ausgebildet und/oder gesteuert ist:
die Schritte des Aufbringens und des selektiven Verfestigens zu wiederholen, bis das Objekt (2) fertiggestellt ist,
wobei die Steuereinheit ausgebildet ist, die Vorrichtung so zu steuern, dass sie
zunächst eine Stützkonstruktion (30, 40) auf einer Bauplattform (9) und dann das Objekt (2) auf der Stützkonstruktion (30) bildet und
die Stützkonstruktion (30, 40) so bildet, dass sie einen geschwächten Bereich (30b, 40b) aufweist, der im Durchschnitt näher an der Bauplattform (9) als an dem Objekt (2) angeordnet ist und der leichter durchtrennbar ist als die in der Höhe benachbarten Bereiche (30a, 40a) der Stützkonstruktion (30, 40).

15. Vorrichtung (1) zum Herstellen eines dreidimensionalen Objekts (2) durch schichtweises Aufbringen und selektives Verfestigen eines Aufbaumaterials (13), umfassend:
einen über ein Baufeld (10) bewegbaren Beschichter (14) zum Aufbringen einer Schicht des Aufbaumaterials (13) auf das Baufeld (10) und
eine Verfestigungsvorrichtung (20) zum selektiven Verfestigen der aufgebrachten Schicht an Stellen, die einem Querschnitt des herzustellenden Objekts (2) entsprechen,
wobei die Vorrichtung ausgebildet und/oder gesteuert ist:
die Schritte des Aufbringens und des selektiven Verfestigens zu wiederholen, bis das Objekt (2) fertiggestellt ist,
zunächst eine Stützkonstruktion (30, 40) auf einer Bauplattform (9) und dann das Objekt (2) auf der Stützkonstruktion (30, 40) zu bilden und
die Stützkonstruktion (30) so zu bilden, dass sie einen geschwächten Bereich (30b) aufweist, der im Durchschnitt näher an der Bauplattform (9) als an dem Objekt (2) angeordnet ist und der leichter durchtrennbar ist als die in der Höhe benachbarten Bereiche (30a, 40a) der Stützkonstruktion (30a).
